(19) Europäisches Patentamt
European Patent Office
Office européen des brevets

(11) **EP 4 305 381 B1**

(12) **FASCICULE DE BREVET EUROPEEN**

(45) Date de publication et mention
de la délivrance du brevet:
**09.04.2025 Bulletin 2025/15**

(21) Numéro de dépôt: **22712399.9**

(22) Date de dépôt: **10.03.2022**

(51) Classification Internationale des Brevets (IPC):
***G01C 11/02*** *(2006.01)*

(52) Classification Coopérative des Brevets (CPC):
**G01C 11/025**

(86) Numéro de dépôt international:
**PCT/EP2022/056231**

(87) Numéro de publication internationale:
**WO 2022/189581 (15.09.2022 Gazette 2022/37)**

(54) **PROCEDE DE RECONNAISSANCE AERIENNE AMELIORE**

VERBESSERTE METHODE DER LUFTBILDVERMESSUNG

IMPROVED AERIAL SURVEY METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.03.2021 FR 2102392**

(43) Date de publication de la demande:
**17.01.2024 Bulletin 2024/03**

(73) Titulaire: **THALES**
**92190 Meudon (FR)**

(72) Inventeur: **SOGNO, Ludovic**
**78990 ELANCOURT (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**WO-A1-2010/134075     FR-A1- 3 039 728**
**US-A1- 2015 254 738**

## Description

## DOMAINE DE L'INVENTION

La présente invention concerne le domaine de la surveillance et de la reconnaissance aérienne.

## ETAT DE LA TECHNIQUE

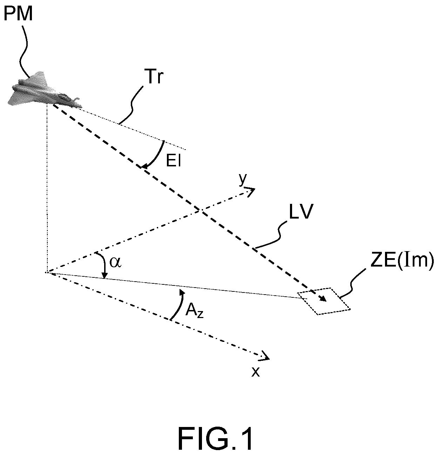

La reconnaissance aérienne est une reconnaissance militaire ou civile faite à l'aide de drones ou d'avion de reconnaissance, plus généralement dénommé plateforme mobile PM. Son rôle est de collecter des renseignements d'origine image et électromagnétique. On se concentre ici sur les acquisitions d'images. La reconnaissance est mise en œuvre par un système optique embarqué sur la plateforme mobile et présentant une ligne de visée (axe optique) LV rendue mobile par des moyens opto-mécaniques. Le système optique réalise une image d'une zone élémentaire du sol ZE, l'image de cette zone élémentaire étant dénommée imagette Im, tel qu'illustré figure 1. De manière classique à un instant donné, on définit l'angle d'élévation El égal à l'angle entre la ligne de visée et le plan horizontal contenant la plateforme et l'angle d'azimut Az égal l'angle entre la projection au sol de la ligne de visée LV et la projection au sol du chemin suivi par la plateforme (axe X). L'angle $\alpha$ est l'angle complémentaire de l'azimut Az, repéré par rapport à un axe Y perpendiculaire à X et orienté du côté de la zone à observer.

Il existe dans le monde un grand nombre de systèmes optroniques permettant de faire de la reconnaissance aérienne, et qui sont essentiellement des nacelles (« pods » en anglais) de reconnaissance aérienne dédiés, des pods de désignation laser et d'attaque, et des boules optronique gyrostabilisées.

Le WO 2010/134075 A1 divulgue un procédé d'acquisition d'images aériennes en mode de balayage.

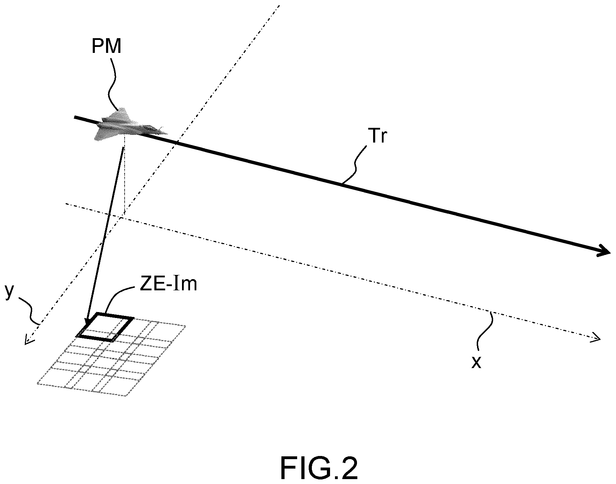

Un mode d'acquisition connu de reconnaissance aérienne est le mode planifié à l'avance. Il est défini par au moins une zone au sol prédéfinie selon un besoin opérationnel, dénommée zone planifiée ZP, dont le système doit faire une image globale. La zone planifiée est subdivisée en régions élémentaires ZE successivement imagées (imagettes) par le système optique par déplacement de la ligne de visée LV, et l'image globale est obtenue en raboutant les imagettes, réalisées avec un certain recouvrement pour ne pas perdre d'information, tel qu'illustré figure 2. Par la suite par simplicité on assimilera la zone élémentaire à son imagette Im sur les figures.

Plusieurs types de zones planifiées ZP peuvent être définies, en fonction du besoin opérationnel et de la mission. Ces zones peuvent par exemple être rectangulaires, carrées, rondes (figure 3), trapézoïdales (figure 4), ou formées de plusieurs parallélogrammes connexes (figure 5). Les points Pini et Pfin montrent la position de la plateforme PM respectivement au début et à la fin de l'acquisition en mode planifiée de la zone ZP.

De manière générale, ces acquisitions sont planifiées en préparation de mission, de manière à acquérir les zones au sol les plus larges possibles. Cette maximalisation de la couverture de la zone observée dépend essentiellement de trois paramètres majeurs :

- la cadence d'acquisition d'images individuelles (imagettes),

- le champ de vue du système optronique,

- le plan de vol de la plateforme (distance, altitude, vitesse).

On connait un autre mode d'acquisition d'image dit mode d'opportunité dans lequel on souhaite acquérir, de manière non programmée à l'avance, des imagettes d'une zone, dénommée zone d'opportunité ZOP, située en dehors de la zone planifiée.

La problématique peut alors se résumer comme suit : tous les systèmes de reconnaissance aérienne font des acquisitions sur des zones au sol planifiées à l'avance et non adaptables en vol; il n'est donc à priori pas possible de faire des acquisitions d'opportunité lorsqu'une acquisition planifiée est en cours sans l'interrompre.

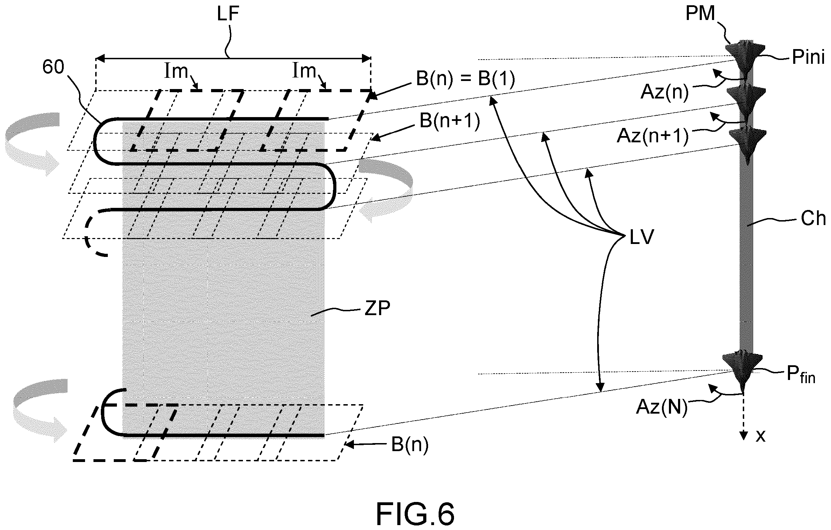

La figure 6 illustre le fonctionnement selon l'état de la technique du mode d'acquisition planifié. L'acquisition s'effectue par bandeaux successifs B(n), B(n+1) en déplaçant la ligne de visée en lacets. La ligne 60 est le chemin au sol suivi par la ligne de visée. Un bandeau B comprend une imagette ou une pluralité d'imagettes juxtaposées selon une direction latérale par rapport au chemin Ch suivi par la plateforme. La longueur d'un bandeau définit la largueur de fauchée LF. Typiquement la largeur de la zone planifiée ZP est légèrement inférieure (fraction d'imagette de part et d'autre) à la largeur de fauchée réelle du système, d'une part pour tenir compte du fait qu'il y a un nombre entier d'imagettes, mais aussi pour prendre en compte les erreurs de positionnement de la ligne de visée.

On définit Az(n) azimut d'un bandeau B(n) (n indice du bandeau, allant du premier B1 au dernier bandeau $B_N$ de la zone planifiée) l'angle d'azimutde la ligne de visée lors de l'acquisition de l'imagette située à l'extrémité du bandeau B(n) côté plateforme.

Du fait du déplacement en lacets de la ligne de visée, l'azimut Az(n) est l'azimut en début d'acquisition d'un bandeau B(n) courant pour lequel le début d'acquisition est localisé à l'extrémité du bandeau côté plateforme (le premier bandeau représenté sur la figure 6) et l'azimut Az(n+1) du bandeau B(n+1) suivant le bandeau courant est l'azimut de la ligne de visée en fin d'acquisition du bandeau B(n+1). En effet, du fait du déplacement en lacet de la ligne de visée d'un bandeau à l'autre, la fin de l'acquisition de B(n+1) correspond à l'imagette localisée à l'extrémité du bandeau côté plateforme.

Lorsque l'on souhaite balayer une zone planifiée de grande dimension, selon un mode préféré connu l'acquisition s'effectue « en avance constante », c'est à dire qu'on s'arrange pour avoir pour tous les bandeaux Az(n) = Az0 constante, tel qu'illustré figure 6. Dans ce cas l'acquisition d'un bandeau se fait à la même vitesse que l'avancée de la plateforme mobile.

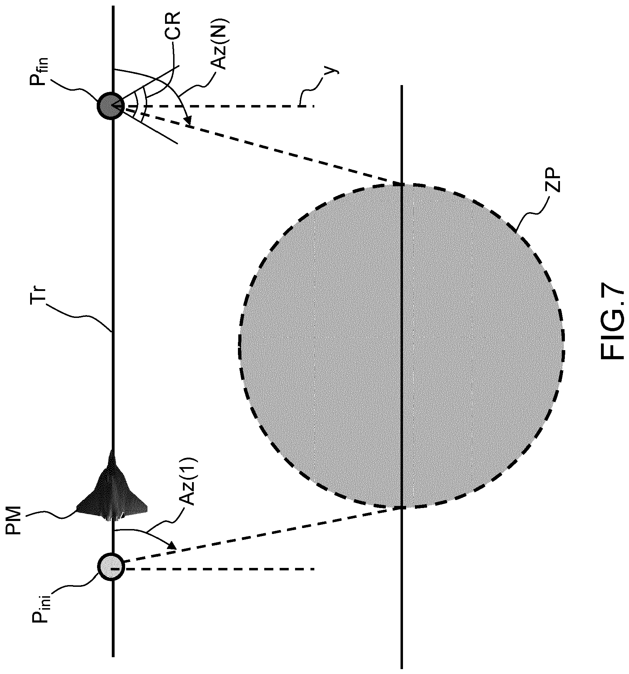

Selon un autre mode de réalisation d'une acquisition planifiée, illustré figure 7, on balaye une zone planifiée ZP en acceptant un décalage progressif de la ligne de visée d'un bandeau à l'autre. Pour le cas usuel où la ligne de visée « prend du retard » (ou de l'avance) entre le début de l'acquisition et la fin de l'acquisition, il faut veiller à ce que l'angle d'azimut du dernier bandeau ne sorte pas du champ de regard du système optique. Ce champ de regard CR («Field of regard» en anglais) est la plage angulaire accessible pour la ligne de visée compte tenu des contraintes opto-mécaniques du système optique considéré et de sa position sur la plateforme.

Si l'objectif recherché est de faire une acquisition avec une avance constante, compte tenu des divers paramètres du système on cherche à obtenir la largeur de fauchée maximale LFm sans prendre de retard par rapport à l'avancée de l'avion. Cela impose des relations à respecter entre les différents paramètres du système.

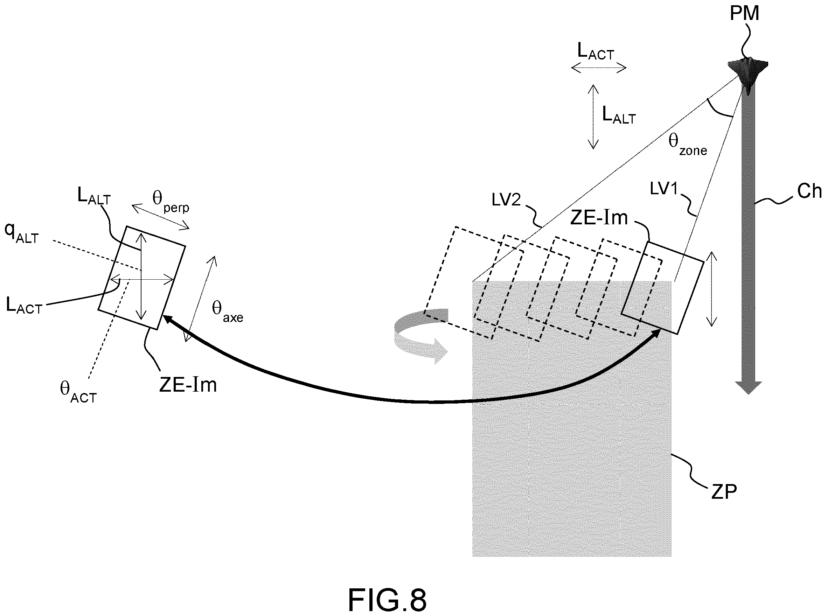

La dimension des imagettes est déterminée par les dimensions du détecteur (généralement un détecteur matriciel carré ou rectangulaire), du système optique, et de la distance focale de l'optique d'imagerie. Dans le cas général la ligne de visée est orientée de sorte que les dimensions des imagettes (c'est-à-dire des ZE correspondantes) ne sont pas nécessairement parallèles aux dimensions de la zone planifiée à observer ZP, tel qu'illustré figure 8. Lors de l'acquisition d'un bandeau la ligne de visée passe d'une positon LV1 à une position LV2, la différence entre ces deux positions définissant le champ $\theta_{zone}$, champ sous lequel la plateforme voit la longueur du bandeau à acquérir. La zone élémentaire ZE imagée par le système optique sur le détecteur définit un champ de vue conique de base rectangulaire interceptant le plan du sol.

On définit les grandeurs :

$\theta_{axe}$ : champ de vue dans la direction parallèle à l'axe de la ligne de visée,

$\theta_{perp}$ : champ de vue dans la direction perpendiculaire à l'axe de la ligne de visée,

$\theta_{ALT}$ : champ de vue dans la direction parallèle à l'axe X d'avancée de la plateforme (ALT pour « ALong Track » en anglais),

$\theta_{ACT}$ : champ de vue dans la direction perpendiculaire à l'axe X d'avancée de la plateforme, (ACT pour « ACross Track » en anglais),

$L_{ALT}$ : dimension de ZE dans la direction de l'axe X

$L_{ACT}$ : dimension de ZE dans la direction perpendiculaire à l'axe X (ACT).

Le nombre d'imagettes minimale Nim pour réaliser un bandeau est :

$$N_{im} = Partie\ Entière\ \left(\frac{\theta_{zone}}{\theta_{ACT}}\right) + 1$$

Le temps d'acquisition minimal de ce bandeau $T_{band}$ est donc :

$$T_{band} = \frac{N_{im}}{F_{im}} + T_{ret}$$

avec $F_{im}$ fréquence d'acquisition des imagettes, $T_{ret}$ temps pour passer d'un bandeau au suivant.

Pour ne pas que la ligne de visée « prenne du retard » par rapport à l'avancée de la plateforme, le temps $T_{band}$ doit rester inférieur ou égal à $T_{vol}$, temps mis par la plateforme pour parcourir la largeur du bandeau $L_{ALT}$.

$$T_{Vol} = \frac{L_{ALT}}{V_{pf}}$$

avec $V_{pf}$ vitesse de la plateforme.

Et donc l'acquisition d'une largeur de fauchée LF maximale est limitée par l'équation :

$$T_{band} \leq T_{vol}$$

Pour obtenir une zone observée la plus grande possible on cherche à maximiser $T_{band}$ dans la limite de $T_{vol}$, c'est-à-dire maximiser $\theta_{zone}$ soit le nombre d'imagettes par bandeau (pour une fréquence Fim donnée) Nim(max). Dans ce cas il n'y a pas de temps « mort » entre deux bandeaux successifs et on se retrouve de manière classique dans la situation du balayage « en avance constante », c'est-à-dire sans prendre d'avance ni de retard par rapport à la vitesse de la plateforme, avec une largeur de fauchée maximale LFm.

Il n'y a pas actuellement de produit existant qui soit réputé pouvoir faire simultanément des acquisitions planifiées et des acquisitions d'opportunité. En conséquence, si des acquisitions d'opportunité sont à réaliser, l'acquisition planifiée en cours doit être interrompue.

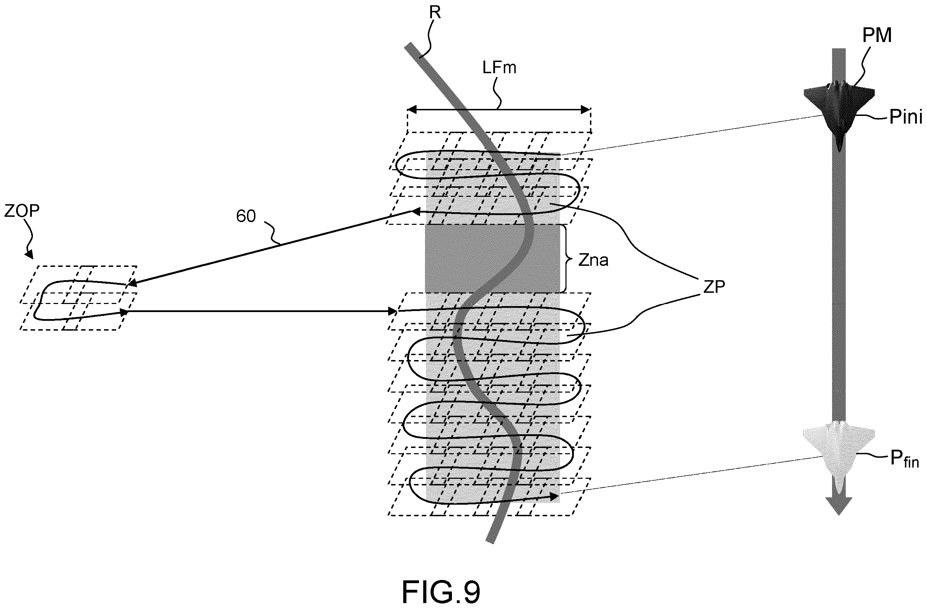

Dans la situation d'une avance constante à largeur de fauchée maximale, une fois l'acquisition d'opportunité effectuée, il n'y a pas de temps restant pour procéder à l'acquisition de la partie de la zone planifiée qui n'a pas été observée du fait de l'interruption. La reprise de l'acquisition planifiée s'effectue pour un bandeau de la zone planifiée garantissant la valeur d'azimut Az0 pour le bandeau considéré. Cela signifie que lorsqu'il est demandé de faire une acquisition d'opportunité, une partie de la zone initialement planifiée, Zna, ne peut plus être acquise, tel qu'illustré figure 9.

Un but de la présente invention est de remédier aux inconvénients précités en proposant un procédé d'acquisition d'images permettant l'interruption d'une acquisition planifiée par une acquisition d'opportunité tout en permettant une acquisition d'au moins une partie de la zone planifiée survolée lors de l'interruption.

## DESCRIPTION DE L'INVENTION

L'invention concerne un procédé d'acquisition d'images pour réaliser une reconnaissance aérienne, mis en œuvre par un système optique embarqué sur une plateforme mobile et présentant une ligne de visée, le système optique réalisant une image d'une zone élémentaire du sol dénommée imagette,

on définit pour l'acquisition d'images lors de la mise en œuvre dudit procédé :

- un mode d'acquisition d'images dit mode planifié dans lequel des imagettes d'une zone du sol prédéfinie selon un besoin opérationnel sont acquises, ladite zone étant dénommé zone planifiée, l'acquisition s'effectuant par bandeaux successifs en déplaçant la ligne de visée en lacets, un bandeau comprenant une imagette ou une pluralité d'imagettes juxtaposées,

- un mode d'acquisition d'images dit mode d'opportunité dans lequel des imagettes d'au moins une zone d'opportunité sont acquises, la zone d'opportunité étant située en dehors de la zone du sol prédéfinie,

ledit procédé comprenant les étapes suivantes :

A. acquisition selon le mode planifié d'une zone planifiée nominale incluant une zone d'intérêt ,

B. interruption du mode planifié et acquisition, selon le mode d'opportunité, d'imagettes de ladite zone d'opportunité,

C. reprise du mode planifié, la ligne de visée étant positionnée de sorte que la première imagette acquise lors de la reprise appartienne au bandeau suivant celui auquel appartient la dernière imagette acquise avant l'interruption, le temps d'acquisition et/ou le nombre d'imagettes par bandeau étant réduit, de manière à rattraper un retard dû à l'acquisition d'opportunité, les imagettes étant choisies de manière à au moins couvrir ladite zone d'intérêt,

D. une fois le retard rattrapé, reprise du mode planifié pour l'acquisition d'imagettes de la zone planifiée nominale ou d'intérêt, ou nouvelle acquisition d'imagettes selon le mode d'opportunité sur une nouvelle zone d'opportunité.

Selon une variante la zone planifiée nominale coïncide avec la zone d'intérêt.

Selon une autre variante la zone planifiée nominale est plus grande que la zone d'intérêt, le nombre d'imagettes étant réduit pendant l'étape C.

Selon un mode de réalisation, dans l'étape C le nombre d'imagettes par bandeau d'un bandeau courant est inférieur ou égal au nombre d'imagettes du bandeau suivant le bandeau courant, jusqu'à atteindre un nombre d'imagettes par bandeau correspondant à celui de la zone planifiée nominale.

Selon un mode de réalisation un bandeau de la zone d'intérêt comprend une seule imagette.

Selon un mode de réalisation on définit un azimut Az de la ligne de visée égal à un angle entre la projection au sol de la ligne de visée et la projection au sol du chemin suivi par la plateforme, ledit azimut étant compris dans une plage angulaire dénommée champ de regard limité par les contraintes du système optique et sa position sur la plateforme. Dans ce mode le retard est rattrapable à condition que l'azimut de la ligne de visée au début de l'étape C soit compris dans le champ de regard.

Selon un mode de réalisation on définit une plage angulaire prédéfinie dite plage nominale comprise dans le champ de regard, et on définit un angle d'azimut d'un bandeau égal à l'azimut de la ligne de visée lors de l'acquisition de l'imagette située à une extrémité du bandeau côté plateforme. Dans ce mode le retard est rattrapé pendant l'étape C en diminuant progressivement l'azimut d'un bandeau au fur et à mesure du balayage des bandeaux, jusqu'à ce que l'angle d'azimut correspondant soit compris dans ladite plage nominale.

Selon un mode de réalisation lors de l'étape **A** l'azimut des tous les bandeaux est égal à une valeur constante Az0, et lors de l'étape **C** le retard est rattrapé au bandeau pour lequel l'azimut est à nouveau égal à Az0.

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :

La figure 1 déjà citée décrit des paramètres de la reconnaissance aérienne.

La figure 2 déjà citée illustre la reconnaissance d'une zone planifiée.

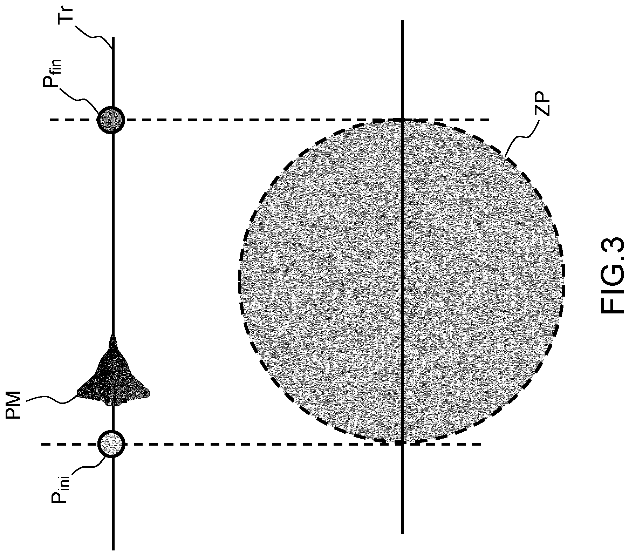

La figure 3 déjà citée illustre une zone planifiée ronde.

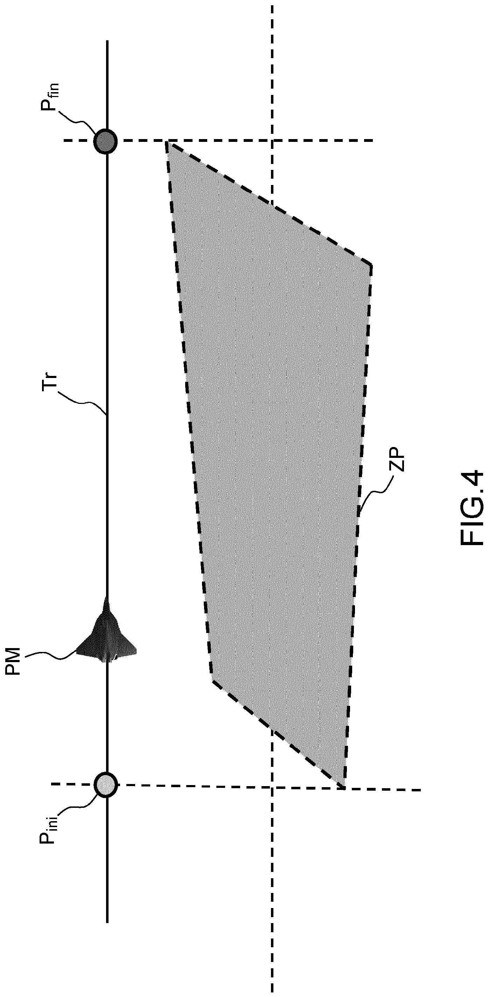

La figure 4 déjà citée illustre une zone planifiée trapézoïdale.

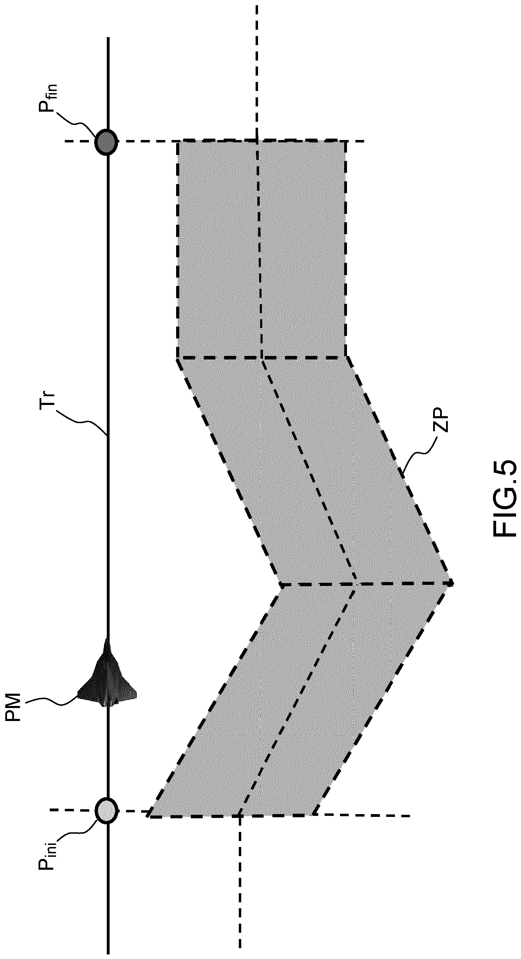

La figure 5 déjà citée illustre une zone planifiée formées de plusieurs parallélogrammes connexes.

La figure 6 déjà citée illustre un exemple de reconnaissance aérienne par un mode d'acquisition planifié, l'acquisition s'effectuant par bandeaux successifs en déplaçant la ligne de visée en lacets, et en avance constante.

La figure 7 déjà citée illustre un autre exemple de reconnaissance aérienne par un mode d'acquisition planifié dans lequel on balaye une zone planifiée en acceptant un décalage progressif de la ligne de visée d'un bandeau à l'autre.

La figure 8 déjà citée cas illustre un cas général dans lequel la ligne de visée est orientée de sorte que les dimensions des imagettes ne sont pas nécessairement parallèles aux dimensions de la zone planifiée à observer.

La figure 9 déjà citée illustre la combinaison d'une acquisition selon le mode planifié en avance constante et selon le mode d'opportunité, selon l'état de la technique.

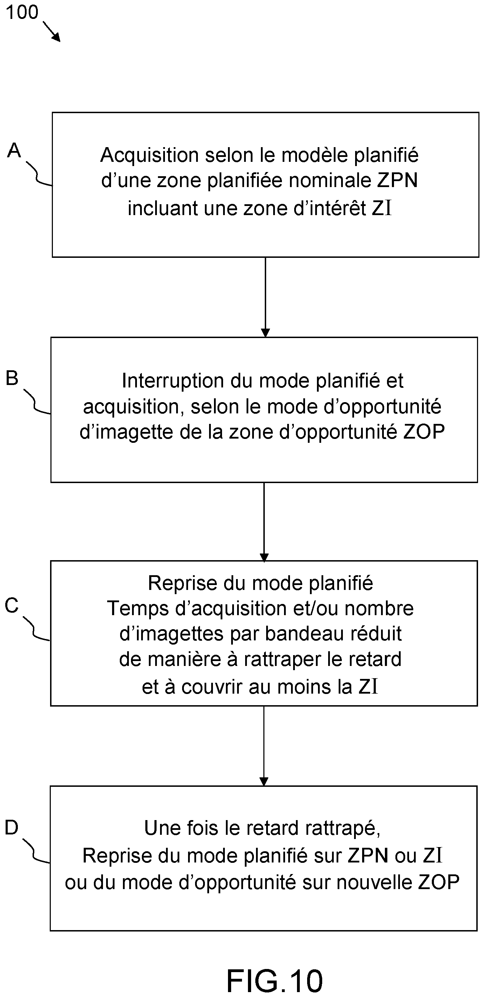

La figure 10 illustre le procédé selon l'invention.

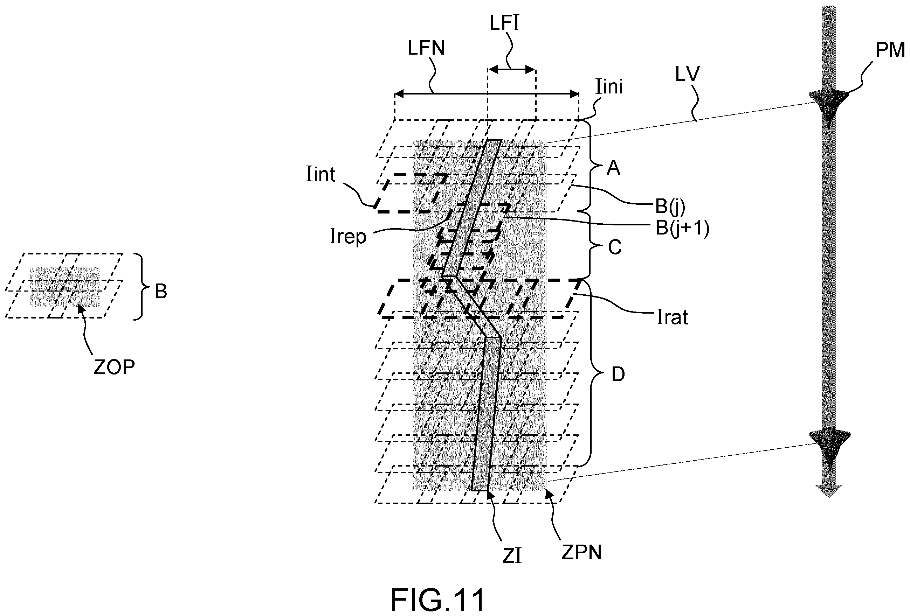

La figure 11 décrit un exemple de mise en œuvre des différentes étapes selon une première variante de l'invention.

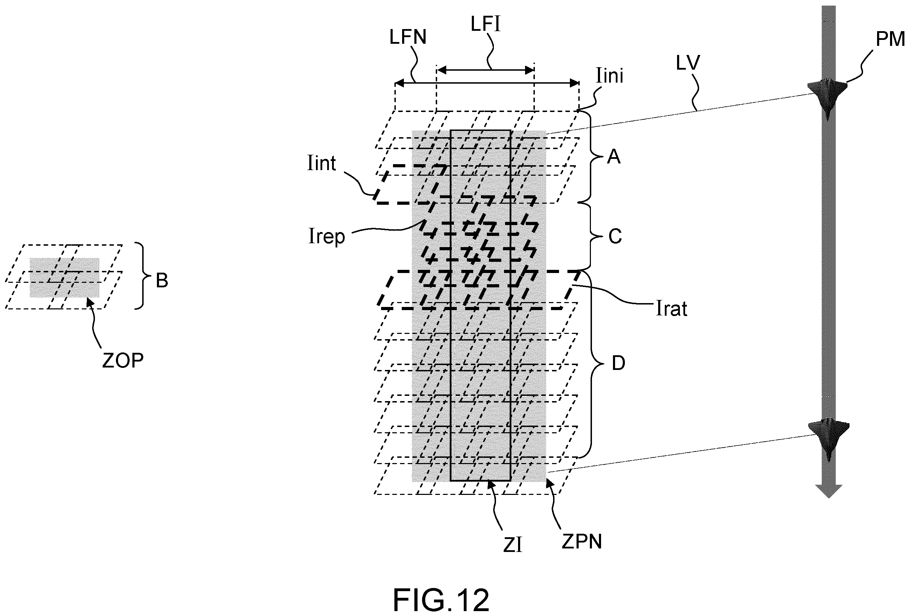

La figure 12 illustre un autre exemple de la première variante dans lequel la largeur de fauchée LFI comprend deux imagettes.

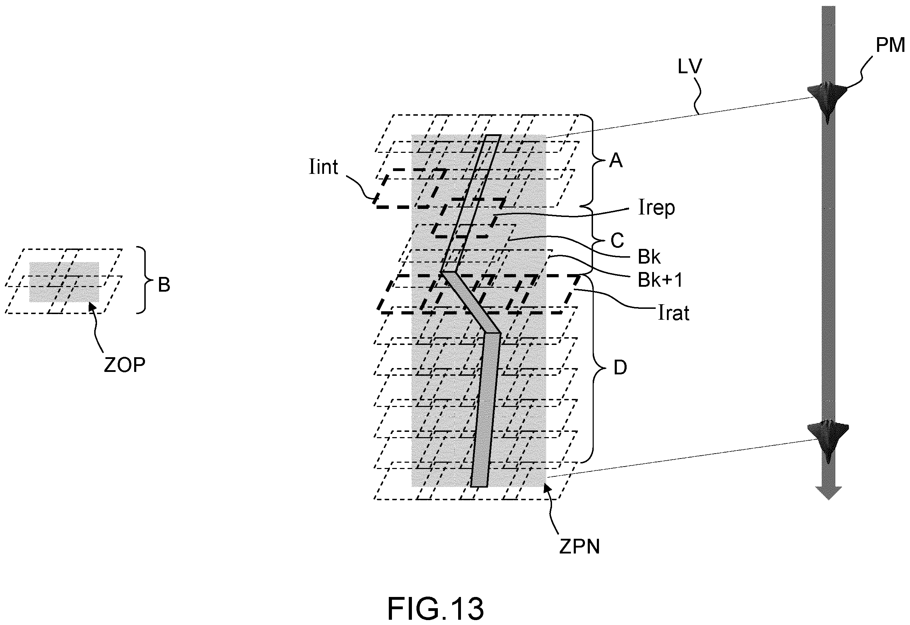

La figure 13 illustre un mode de réalisation dans lequel dans l'étape C le nombre d'imagettes par bandeau d'un bandeau courant est inférieur ou égal au nombre d'imagettes du bandeau suivant le bandeau courant, jusqu'à atteindre un nombre d'imagettes par bandeau correspondant à celui de la zone planifiée nominale.

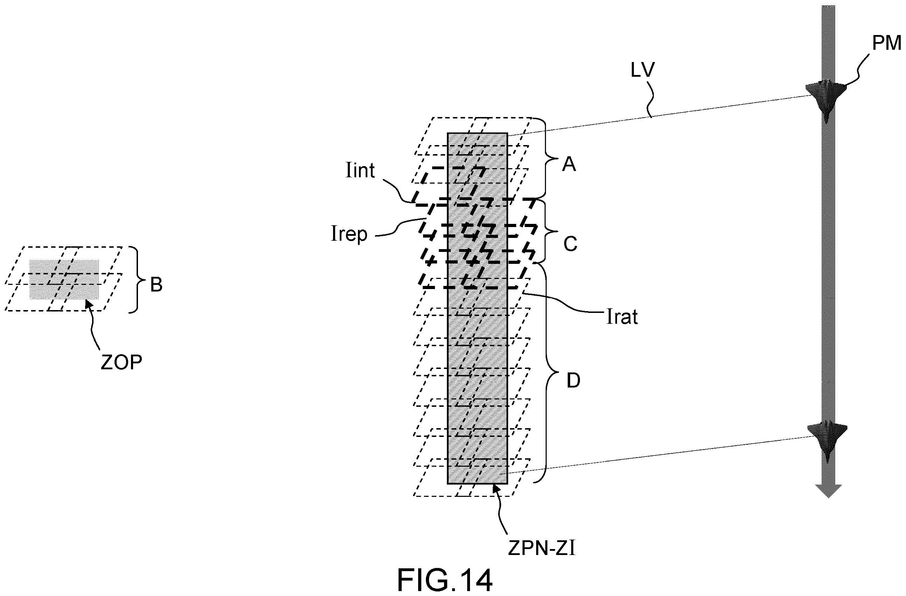

La figure 14 illustre une deuxième variante du procédé selon dans lequel la zone planifiée nominale coïncide avec la zone d'intérêt.

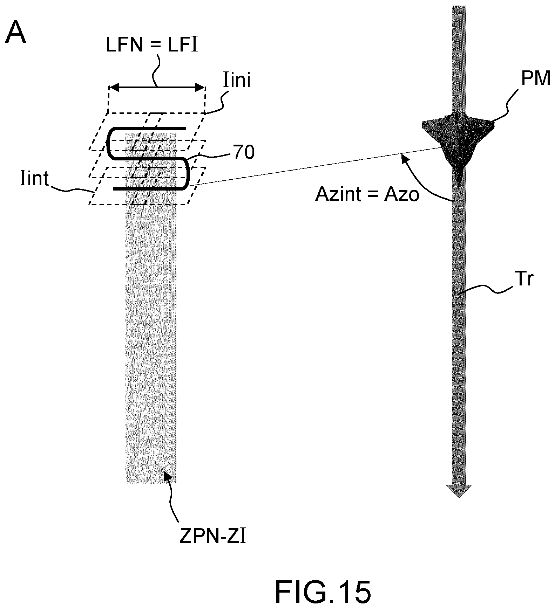

La figure 15 illustre l'étape A d'un exemple de la deuxième variante du procédé, selon le mode « avance constante ».

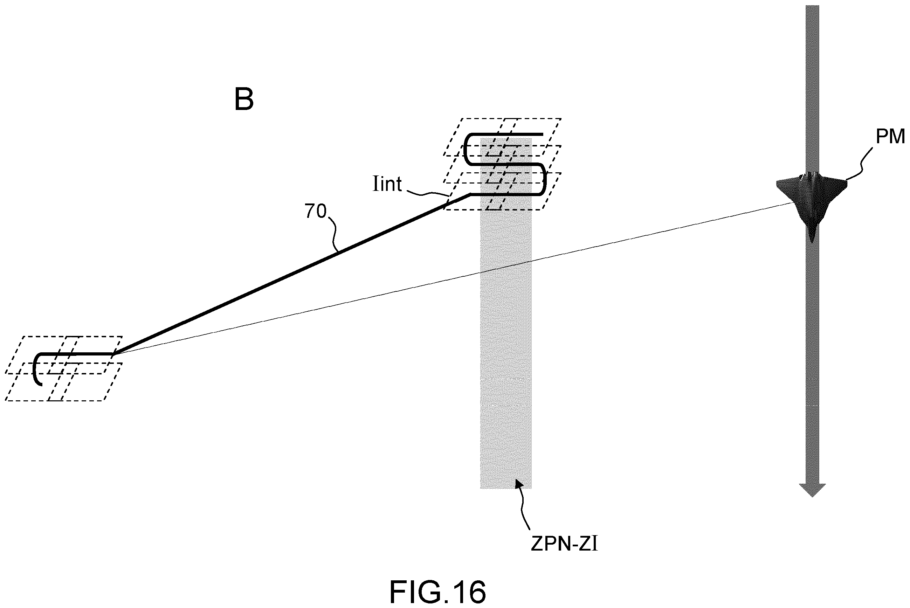

La figure 16 illustre l'étape B de l'exemple de la deuxième variante du procédé, selon le mode « avance constante ».

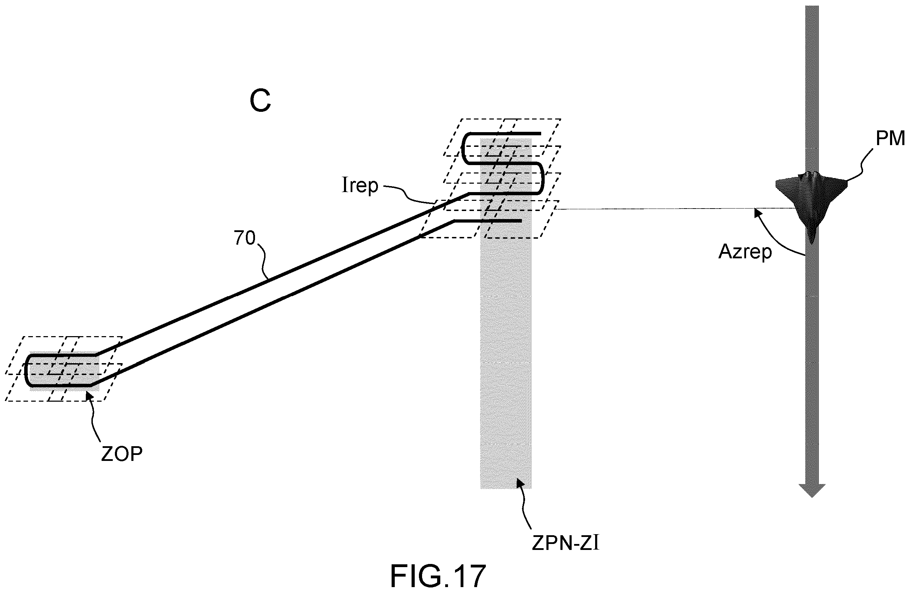

La figure 17 illustre le début de l'étape C de l'exemple de la deuxième variante du procédé, selon le mode « avance constante ».

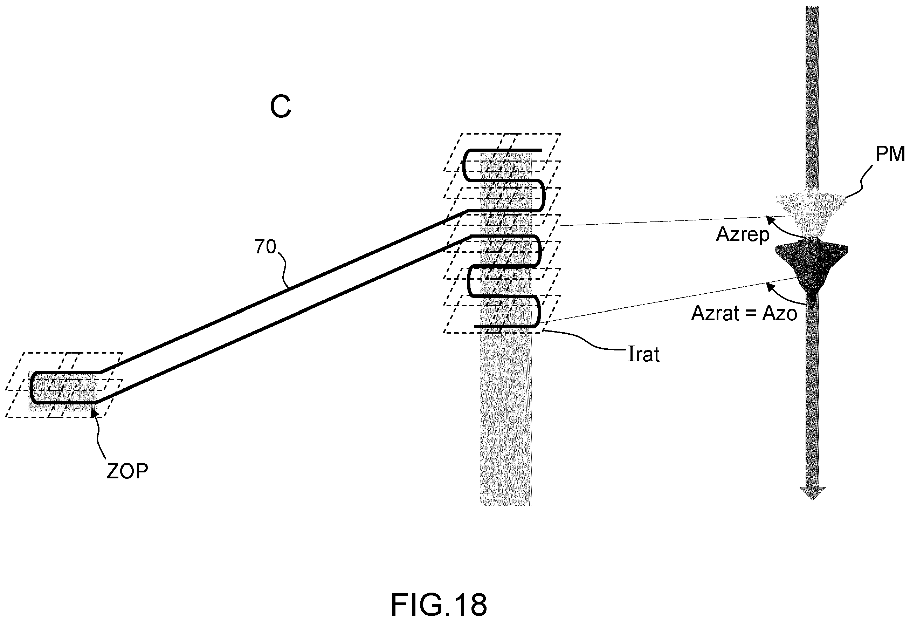

La figure 18 illustre l'autre partie de l'étape C, le rattrapage du retard.

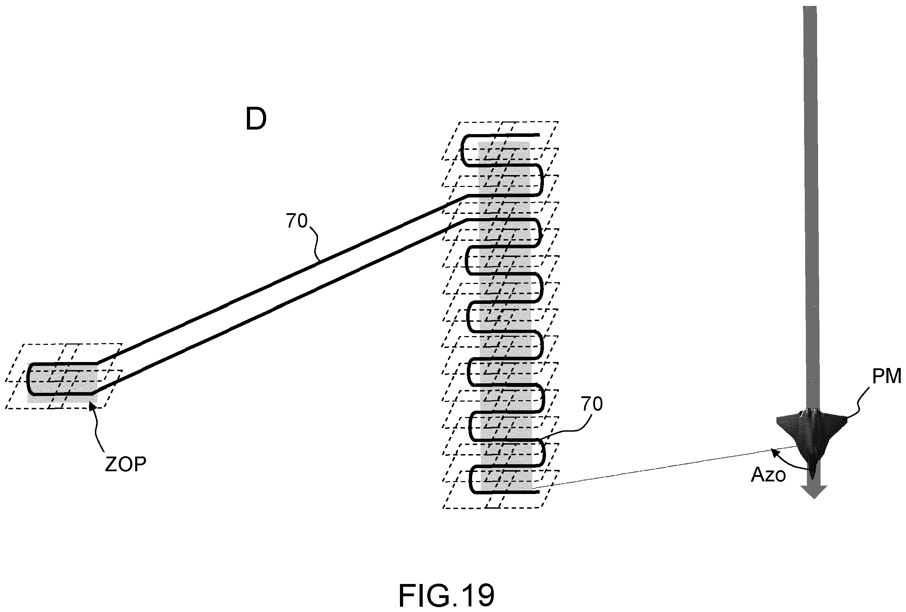

La figure 19 illustre l'étape D pour le cas où l'acquisition planifiée est reprise

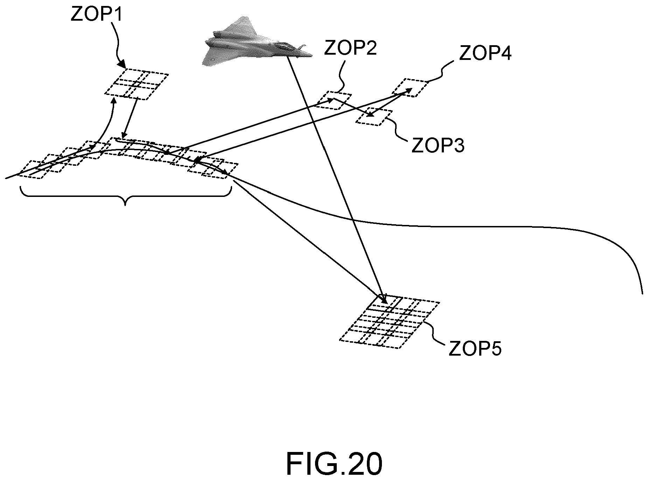

La figure 20 illustre un exemple de la deuxième variante de l'invention avec une seule imagette par bandeau.

**DESCRIPTION DETAILLEE DE L'INVENTION**

L'invention concerne un procédé d'acquisition d'images 100 pour réaliser une reconnaissance aérienne, mis en œuvre par un système optique embarqué sur une plateforme mobile PM et présentant une ligne de visée LV, le système optique réalisant une image d'une zone élémentaire du sol dénommée imagette Im.

Pour l'acquisition d'images lors de la mise en œuvre dudit procédé on définit :

- un mode d'acquisition d'images dit mode planifié dans lequel des imagettes d'une zone du sol prédéfinie selon un besoin opérationnel sont acquises, cette zone étant dénommé zone planifiée. L'acquisition s'effectue par bandeaux successifs en déplaçant la ligne de visée en lacets, un bandeau comprenant une imagette ou une pluralité d'imagettes juxtaposées.

- un mode d'acquisition d'images dit mode d'opportunité dans lequel des imagettes d'au moins une zone d'opportunité ZOP sont acquises, la zone d'opportunité étant située en dehors de la zone du sol prédéfinie.

L'idée de l'invention est d'adapter la prise de vue planifiée pour pouvoir l'interrompre avec des acquisitions d'opportunité, sans pour autant qu'il y ait de partie de la zone planifiée initiale non survolée (type Zna voir figure 9), quitte à réduire la superficie de cette zone acquise pendant un certain temps. On dénomme ce type d'acquisition mixant mode planifié et mode d'opportunité mode entrelacé. On va si besoin réduire la dimension de la zone planifiée, avant et/ou après l'acquisition d'opportunité de manière à utiliser le temps libéré pour faire des acquisitions d'opportunité.

Le procédé 100 est illustré figure 10. Un exemple de mise en œuvre des différentes étapes selon une première variante est décrit sur la figure 11.

Une première étape **A** consiste en une acquisition selon le mode planifié d'une zone planifiée nominale ZPN incluant une zone d'intérêt ZI. La zone planifiée nominale est la zone que l'on souhaite observer et la zone d'intérêt ZI est la partie de la zone planifiée qu'il est impératif d'enregistrer, c'est-à-dire dont il faut acquérir une image via l'enregistrement d'imagettes. On nomme Iini la première image acquise.

A la zone nominale correspond une largeur de fauchée nominale LFN inférieure ou égale à la largeur de fauchée maximale LFm décrite précédemment. A la zone d'intérêt correspond une largeur de fauchée d'intérêt LFI qui est strictement inférieure à la largeur de fauchée maximale LFm.

Dans une première variante illustrée figure 11 la zone planifiée nominale ZPN est plus grande que la zone d'intérêt ZI et on a LFI<LFN≤LFm. Dans l'exemple de la figure 11 la largeur de fauchée LFN comprend 4 imagettes par bandeau. Selon un mode de réalisation également illustré figure 11 la largeur de fauchée LFI comprend une imagette par bandeau. Dans l'exemple la zone ZI suit une route.

Dans une deuxième variante décrite plus loin la zone d'intérêt coïncide avec la zone planifiée nominale, on a LFN=LFI. Dans ce cas on a LFN=LFI<LFm

Lors d'une étape **B** a lieu une interruption du mode planifié, suivi d'une acquisition d'imagettes de la zone d'opportunité ZOP selon le mode d'opportunité. On nomme Iint la dernière image acquise selon le mode planifié avant l'interruption, et Azint l'azimut de la ligne de visée sur Iint.

L'acquisition de la zone d'opportunité ZOP prend un temps Top, et pendant ce temps Top la plateforme continue d'avancer.

Dans une étape **C** on reprend le mode planifié, la ligne de visée étant positionnée de sorte que la première imagette acquise lors de la reprise dénommée Irep appartienne au bandeau B(j+1) suivant le bandeau B(j) (j indice du bandeau) auquel appartient la dernière imagette acquise avant l'interruption Iint. Dans cette étape C le temps d'acquisition et/ou le nombre d'imagettes par bandeau est réduit, de manière à rattraper un retard dû à l'acquisition d'opportunité. Les imagettes sont choisies de manière à au moins couvrir ladite zone d'intérêt ZI.

Dans l'exemple de la figure 11 correspondant à la première variante le nombre d'imagettes est réduit. La réduction du nombre d'imagettes (et donc de la largeur de fauchée) permet de diminuer le temps consacré à chaque bandeau. On met à profit ce temps récupéré pour rattraper le retard Top pris par l'acquisition d'opportunité.

Puisque la plateforme a continué à avancer, l'azimut correspondant à Irep, Azrep, est nécessairement supérieur à Azint. Pour que l'acquisition de l'imagette Irep soit possible il faut que Azrep soit compris dans le champ de regard CR.

Le retard est rattrapé lorsque l'azimut de la ligne de visée a suffisamment diminué (voir plus loin) par rapport à Azrep.

Une fois le retard rattrapé dans une étape D on reprend le mode planifié configuré pour l'acquisition d'imagettes de la zone planifiée nominale (ou de la zone d'intérêt), ou on repart pour une nouvelle acquisition d'imagettes selon le mode d'opportunité sur une nouvelle zone d'opportunité. On dénomme Irat la première imagette acquise lors de l'étape D. Dans l'exemple de la figure 11 on reprend l'acquisition de la zone ZPN.

Ainsi le procédé selon l'invention concentre l'acquisition planifiée sur le besoin opérationnel prioritaire ZI pendant l'étape C. Dans l'exemple de la figure 11 le besoin opérationnel prioritaire est une route. L'acquisition planifiée se concentre donc sur ce besoin opérationnel lors de l'étape C de rattrapage et le temps qui n'est pas passé à acquérir des zones autour de la zone d'intérêt permet donc de rattraper le retard.

La figure 12 illustre un autre exemple de la première variante dans lequel la largeur de fauchée LFI comprend plus qu'une seule imagette, ici 2 dans l'exemple. Le nombre d'imagettes par bandeau pour acquérir la zone ZI dépend bien entendu du besoin opérationnel.

Selon un autre mode de réalisation illustré figure 13 dans l'étape C le nombre d'imagettes par bandeau d'un bandeau courant Bk est inférieur ou égal au nombre d'imagettes du bandeau suivant le bandeau courant Bk+1, jusqu'à atteindre un nombre d'imagettes par bandeau correspondant à celui de la zone planifiée nominale. Ici le nombre d'imagettes est progressivement augmenté pendant l'étape C, ce qui permet en comparaison aux exemples des figures 12 ou 13 d'acquérir plus d'imagettes : pendant l'étape C de rattrapage on couvre au moins la zone ZI (définie ici par une imagette par bandeau), mais également certaines zones autour de ZI.

Cette première variante est compatible d'une largeur de fauchée nominale égale à LFm, qui permet l'acquisition de la plus grande zone possible lors des étapes A et D (cas de la reprise de l'acquisition planifiée).

Lorsque la largeur de fauchée LFN est inférieure à la largeur de fauchée maximale LFm, dans une variante du procédé selon l'invention on utilise dans l'étape A le moindre nombre d'imagettes par bandeau (Nim<Nim(max)) pour consacrer moins de temps à chaque bandeau. Cela permet à l'acquisition planifiée de l'étape A de « prendre de l'avance », ce qui libère du temps pour une acquisition d'opportunité. Lors de l'étape C, on est ainsi plus confortable sur la position de la ligne de la visée vis-à-vis du champ de regard, et le retard à rattraper est moindre.

Selon une deuxième variante du procédé 100 selon l'invention illustrée figure 14 la zone planifiée nominale coïncide avec la zone d'intérêt : ZPN=ZI. Le nombre d'imagettes par bandeau reste ici constant lors des étapes A et C. La variable permettant de rattraper le retard est la réduction du temps consacré à chaque bandeau pendant l'étape C. Pendant l'étape A on concentre l'acquisition planifiée sur le besoin opérationnel prioritaire, sans chercher à avoir la largeur de fauchée maximale. L'acquisition planifiée se concentre donc sur ce besoin opérationnel et le temps qui n'est pas passé à acquérir des zones autour de la zone d'intérêt permet donc de « libérer du temps » pour aller faire des acquisitions d'opportunité lorsque le besoin apparait. Lors de l'étape C de rattrapage le temps consacré à chaque bandeau est réduit.

Selon un mode de réalisation compatible des deux variantes décrites ci-dessus, l'acquisition en mode planifiée pendant l'étape A et le cas échéant l'étape D (lorsqu'une acquisition planifiée est reprise), s'effectue « en avance constante », c'est-à-dire que l'on s'arrange pour que l'angle d'azimut de chaque bandeau soit identique, égale à une valeur prédéfinie Az0. Pour cela on s'arrange pour avoir une cadence d'acquisition des images individuelles (imagettes) compatible de la vitesse de la plateforme. Pour avoir plus de marge pour le rattrapage du retard l'angle Az0 n'est généralement pas égal à 90° mais présente un angle de dépointé vers l'avant. Cet angle de dépointé est une réserve de temps pour le rattrapage du retard.

Les différentes étapes de la deuxième variante du procédé, selon le mode « avance constante » sont illustrées figures 15 à 19.

La figure 15 illustre l'étape **A,** avec un azimut pour chaque bandeau Azint = Az0. Le trajet de ligne de visée au sol est noté 70. Du fait du faible nombre d'imagettes par bandeau il existe un « temps mort » entre la fin de l'acquisition d'un bandeau et le début de l'acquisition du bandeau suivant. La figure 16 illustre l'étape **B,** la figure 17 illustre le début de l'étape **C,** la reprise de l'acquisition planifiée. A cet instant, la plateforme ayant continué à avancer l'azimut de la ligne devisée est différent de Az0, et supérieur. La figure 18 illustre le rattrapage du retard, en diminuant le temps d'acquisition par bandeau, le nombre d'imagettes par bandeau restant constant. Le retard est rattrapé pour le bandeau tel que son l'azimut Azrat est redevenu égal à Az0. Lors du rattrapage l'azimut des bandeaux diminue progressivement. La figure 19 illustre l'étape **D** pour le cas où l'acquisition planifiée est reprise

Ainsi, et ce pour les deux variantes, pour le mode de réalisation en avance constante, lors de l'étape **A** l'azimut des tous les bandeaux est égal à une valeur constante Az0 et lors de l'étape **C** le retard est rattrapé au bandeau pour lequel l'azimut est à nouveau égal à Az0.

Selon un autre mode de réalisation, compatible des deux variantes, on définit une plage angulaire prédéfinie dite plage nominale PAN comprise dans le champ de regard CR. Pour mémoire on définit un angle d'azimut Az(n) d'un bandeau B(n) égal à l'azimut de la ligne de visée lors de l'acquisition de l'imagette située à une extrémité du bandeau côté plateforme. On rattrape le retard pendant l'étape C en diminuant progressivement l'azimut d'un bandeau au fur et à mesure du balayage des bandeaux, jusqu'à ce que l'angle d'azimut correspondant soit compris dans ladite plage nominale PAN.

La figure 20 illustre l'exemple de la deuxième variante avec une seule imagette par bandeau. Cette configuration est adaptée lorsque l'on surveille une route par exemple. Dans cet exemple il est possible de prendre de l'avance lors de l'acquisition planifiée, c'est-à-dire d'avoir un angle d'azimut des bandeaux proche de la valeur extrême du champ de regard vers l'avant. On aura ainsi beaucoup de marge et on peut rattraper plus facilement un retard, ce qui laisse beaucoup de temps disponible pour faire de multiples acquisitions d'opportunités (ZOP1 à ZOP5).

## Revendications

1. Procédé d'acquisition d'images (100) pour réaliser une reconnaissance aérienne, mis en œuvre par un système optique embarqué sur une plateforme mobile (PM) et présentant une ligne de visée (LV), le système optique réalisant une image d'une zone élémentaire du sol dénommée imagette (Im),

   on définit pour l'acquisition d'images lors de la mise en œuvre dudit procédé:

      - un mode d'acquisition d'images dit mode planifié dans lequel des imagettes d'une zone du sol prédéfinie selon un besoin opérationnel sont acquises, ladite zone étant dénommé zone planifiée, l'acquisition s'effectuant par bandeaux successifs en déplaçant la ligne de visée en lacets, un bandeau comprenant une imagette ou une pluralité d'imagettes juxtaposées,

   **caractérisé par le fait qu'**on définit en outre pour l'acquisition d'images lors de la mise en œuvre dudit procédé:

      - un mode d'acquisition d'images dit mode d'opportunité dans lequel des imagettes d'au moins une zone d'opportunité (ZOP) sont acquises, la zone d'opportunité étant située en dehors de la zone du sol prédéfinie,

   ledit procédé comprenant les étapes suivantes :

      **A.** acquisition selon le mode planifié d'une zone planifiée nominale (ZPN) incluant une zone d'intérêt (ZI),
      **B.** interruption du mode planifié et acquisition, selon le mode d'opportunité, d'imagettes de ladite zone d'opportunité,
      **C.** reprise du mode planifié, la ligne de visée étant positionnée de sorte que la première imagette acquise lors de la reprise (Irep) appartienne au bandeau (B(k+1)) suivant celui (B(k)) auquel appartient la dernière

imagette (Iint) acquise avant l'interruption, le temps d'acquisition et/ou le nombre d'imagettes par bandeau étant réduit, de manière à rattraper un retard dû à l'acquisition d'opportunité, les imagettes étant choisies de manière à au moins couvrir ladite zone d'intérêt,

**D.** une fois le retard rattrapé, reprise du mode planifié pour l'acquisition d'imagettes de la zone planifiée nominale ou d'intérêt, ou nouvelle acquisition d'imagettes selon le mode d'opportunité sur une nouvelle zone d'opportunité.

2. Procédé selon la revendication précédente dans lequel la zone planifiée nominale coïncide avec la zone d'intérêt.

3. Procédé selon la revendication 1 dans lequel la zone planifiée nominale est plus grande que la zone d'intérêt, le nombre d'imagettes étant réduit pendant l'étape C.

4. Procédé selon la revendication précédente dans lequel dans l'étape C le nombre d'imagettes par bandeau d'un bandeau courant (Bk) est inférieur ou égal au nombre d'imagettes du bandeau suivant le bandeau courant (Bk+1), jusqu'à atteindre un nombre d'imagettes par bandeau correspondant à celui de la zone planifiée nominale.

5. Procédé selon l'une des revendications précédentes dans lequel un bandeau de la zone d'intérêt comprend une seule imagette.

6. Procédé selon l'une des revendications précédentes dans lequel on définit un azimut Az de la ligne de visée égal à un angle entre la projection au sol de la ligne de visée et la projection au sol du chemin suivi par la plateforme, ledit azimut étant compris dans une plage angulaire dénommée champ de regard (CR) limité par les contraintes du système optique et sa position sur la plateforme,

et dans lequel le retard est rattrapable à condition que l'azimut de la ligne de visée au début de l'étape C soit compris dans le champ de regard.

7. Procédé selon la revendication précédente dans lequel on définit une plage angulaire prédéfinie dite plage nominale (PAN) comprise dans le champ de regard, et on définit un angle d'azimut (Az(n)) d'un bandeau (B(n)) égal à l'azimut de la ligne de visée lors de l'acquisition de l'imagette située à une extrémité du bandeau côté plateforme,

le retard étant rattrapé pendant l'étape C en diminuant progressivement l'azimut d'un bandeau au fur et à mesure du balayage des bandeaux, jusqu'à ce que l'angle d'azimut correspondant soit compris dans ladite plage nominale.

8. Procédé selon la revendication 6 dans lequel on définit un angle d'azimut (Az(n)) d'un bandeau (B(n)) égal à l'azimut lors de l'acquisition de l'imagette située à une extrémité du bandeau côté plateforme, et dans lequel :

- lors de l'étape **A** l'azimut des tous les bandeaux est égal à une valeur constante Az0,
- lors de l'étape **C** le retard est rattrapé au bandeau pour lequel l'azimut est à nouveau égal à Az0.

## Patentansprüche

1. Verfahren zur Bilderfassung (100), um eine Luftaufklärung durchzuführen, das von einem optischen System umgesetzt wird, das auf einer mobilen Plattform (PM) mitgeführt wird und eine Sichtlinie (LV) aufweist, wobei das optische System ein Bild eines als Miniaturbild (Im) bezeichneten elementaren Bodengebiets aufnimmt,

wobei für die Bilderfassung bei der Umsetzung des Verfahrens Folgendes definiert wird:

- ein Bilderfassungsmodus, der als geplanter Modus bezeichnet wird, in dem Miniaturbilder eines Bodengebiets erfasst werden, der gemäß einem operativen Bedarf vordefiniert ist, wobei dieses Gebiet als geplantes Gebiet bezeichnet wird, wobei die Erfassung in aufeinanderfolgenden Streifen erfolgt, indem die Sichtlinie in Serpentinen verschoben wird, wobei ein Streifen ein Miniaturbild oder eine Vielzahl von gegenübergestellten Miniaturbildern umfasst,

**dadurch gekennzeichnet, dass** ferner für die Bilderfassung bei der Umsetzung des Verfahrens Folgendes definiert wird:

- ein Bilderfassungsmodus, der als Gelegenheitsmodus bezeichnet wird, in dem Miniaturbilder von mindestens einem Gelegenheitsgebiet (ZOP) erfasst werden, wobei sich das Gelegenheitsgebiet außerhalb des vordefinierten Bodengebiets befindet,

wobei das Verfahren die folgenden Schritte umfasst:

A. Erfassen eines nominellen geplanten Gebiets (ZPN), das ein Gebiet von Interesse (ZI) einschließt, im geplanten Modus,
B. Unterbrechen des geplanten Modus und Erfassen von Miniaturbildern des Gebiets von Interesse, im Gelegenheitsmodus,
C. Wiederaufnehmen des geplanten Modus, wobei die Sichtlinie so positioniert ist, dass das erste bei der Wiederaufnahme (Irep) erfasste Miniaturbild zu dem Streifen (B(k+1)) gehört, der auf den Streifen (B(k)) folgt, zu dem das letzte vor der Unterbrechung erfasste Miniaturbild (Iint) gehört, wobei die Erfassungszeit und/oder die Anzahl von Miniaturbildern pro Streifen reduziert wird, um eine Verzögerung aufgrund der Gelegenheitserfassung aufzuholen, wobei die Miniaturbilder so gewählt sind, dass sie mindestens das Gebiet von Interesse abdecken,
D. nach dem Aufholen der Verzögerung, Wiederaufnehmen des geplanten Modus zur Erfassung von Miniaturbildern des nominellen geplanten Gebiets oder des Gebiets von Interesse, oder erneutes Erfassen von Miniaturbildern im Gelegenheitsmodus in einem neuen Gelegenheitsgebiet.

2. Verfahren nach dem vorhergehenden Anspruch, wobei das nominelle geplante Gebiet mit dem Gebiet von Interesse zusammenfällt.

3. Verfahren nach Anspruch 1, wobei das nominelle geplante Gebiet größer ist als das Gebiet von Interesse, wobei die Anzahl von Miniaturbildern während Schritt C reduziert wird.

4. Verfahren nach dem vorhergehenden Anspruch, wobei in Schritt C die Anzahl von Miniaturbildern pro Streifen eines aktuellen Streifens (Bk) kleiner oder gleich der Anzahl von Miniaturbildern des auf den aktuellen Streifen (Bk+1) folgenden Streifens ist, bis eine Anzahl von Miniaturbildern pro Streifen erreicht wird, die derjenigen des nominellen geplanten Gebiets entspricht.

5. Verfahren nach einem der vorhergehenden Ansprüche, wobei ein Streifen des Gebiets von Interesse ein einzelnes Miniaturbild umfasst.

6. Verfahren nach einem der vorhergehenden Ansprüche, wobei ein Azimut Az der Sichtlinie gleich einem Winkel zwischen der Projektion der Sichtlinie am Boden und der Projektion des von der Plattform zurückgelegten Weges am Boden definiert wird, wobei der Azimut in einem Blickfeld (CR) genannten Winkelgebiet liegt, das durch die Beschränkungen des optischen Systems und seine Position auf der Plattform begrenzt ist, und wobei die Verzögerung aufholbar ist, vorausgesetzt, dass der Azimut der Sichtlinie zu Beginn von Schritt C im Blickfeld liegt.

7. Verfahren nach dem vorhergehenden Anspruch, wobei ein vordefinierter, nomineller Bereich (PAN) genannter Winkelbereich definiert wird, der im Blickfeld liegt, und ein Azimutwinkel (Az(n)) eines Streifens (B(n)), der gleich dem Azimut der Sichtlinie bei der Erfassung des Miniaturbildes ist, das sich an einem plattformseitigen Ende des Streifens befindet, wobei die Verzögerung während Schritt C aufgeholt wird, indem der Azimut eines Streifens während des Abtastens der Streifen schrittweise verringert wird, bis der entsprechende Azimutwinkel in dem nominellen Bereich umfasst ist.

8. Verfahren nach Anspruch 6, wobei ein Azimutwinkel (Az(n)) eines Streifens (B(n)) gleich dem Azimut bei der Erfassung des Miniaturbildes definiert wird, das sich an einem plattformseitigen Ende des Streifens befindet, und wobei:

- in Schritt A, der Azimut aller Streifen gleich einem konstanten Wert Az0 ist,
- in Schritt C, die Verzögerung bei demjenigen Streifen aufgeholt wird, bei dem der Azimut wieder gleich Az0 ist.

## Claims

1. A method (100) for acquiring images to perform aerial reconnaissance, implemented by an optical system located on board a mobile platform (PM) and having a line of sight (LV), the optical system taking an image of an elementary region of ground, which is referred to as an elementary image (Im),

for the acquisition of images during the implementation of said method, the following are defined:

- an image acquisition mode referred to as planned mode, in which elementary images of a region of ground that is predefined depending on an operational need are acquired, said region being referred to as planned region, the acquisition being carried out in successive strips by moving the line of sight along a switchback path, a strip comprising one elementary image or a plurality of juxtaposed elementary images,

characterised by the fact that the following are further defined for the acquisition of images during the implementation of said method:

- an image acquisition mode referred to as opportunity mode, in which elementary images of at least one opportunity region (ZOP) are acquired, the opportunity region being located outside the predefined region of ground,

said method comprising the following steps:

A. acquiring, in the planned mode, a nominal planned region (ZPN) including a region of interest (ZI),
B. interrupting the planned mode and acquiring, in the opportunity mode, elementary images of said opportunity region,
C. resuming the planned mode, the line of sight being positioned so that the first elementary image acquired on resumption (Irep) belongs to the strip (B(k+1)) following the strip (B(k)) to which the last elementary image (Iint) acquired before interruption belongs, the acquisition time and/or the number of elementary images per strip being reduced, so as to cancel out a lag due to the opportunity acquisition, the elementary images being chosen so as to at least cover said region of interest,
D. once the lag has been cancelled out, resuming the planned mode to acquire elementary images of the nominal planned region or region of interest, or newly acquiring elementary images, in the opportunity mode, of a new opportunity region.

2. The method according to the preceding claim, wherein the nominal planned region coincides with the region of interest.

3. The method according to claim 1, wherein the nominal planned region is larger than the region of interest, the number of elementary images being reduced during step C.

4. The method according to the preceding claim, wherein, in step C, the number of elementary images per strip of a current strip (Bk) is less than or equal to the number of elementary images of the strip following the current strip (Bk+1), until a number of elementary images per strip corresponding to that of the nominal planned region is reached.

5. The method according to one of the preceding claims, wherein a strip of the region of interest comprises a single elementary image.

6. The method according to one of the preceding claims, wherein an azimuth Az of the line of sight is defined, which is equal to an angle between the projection on the ground of the line of sight and the projection on the ground of the path followed by the platform, said azimuth being comprised in an angular range, referred to as the eye field (CR), limited by the constraints of the optical system and its position on the platform,
and wherein the lag can be cancelled out provided that the azimuth of the line of sight at the start of step C is comprised in the eye field.

7. The method according to the preceding claim, wherein a predefined angular range referred to as the nominal range (PAN) comprised in the eye field, and an azimuth angle (Az(n)) of a strip (B(n)) equal to the azimuth of the line of sight during the acquisition of the elementary image located at a platform-side end of the strip are defined,
the lag being cancelled out during step C by gradually decreasing the azimuth of a strip as the strips are scanned, until the corresponding azimuth angle is comprised in said nominal range.

8. The method according to claim 6, wherein an azimuth angle (Az(n)) of a strip (B(n)) equal to the azimuth during the acquisition of the elementary image located at a platform-side end of the strip is defined, and wherein:

- in step A, the azimuth of all the strips is equal to a constant value Az0,
- in step C, the lag is cancelled out by the strip for which the azimuth is again equal to Az0.

FIG.1

FIG.2

FIG.3

FIG.4

FIG.5

FIG.6

FIG.7

FIG.8

EP 4 305 381 B1

FIG.9

100

A — Acquisition selon le modèle planifié d'une zone planifiée nominale ZPN incluant une zone d'intérêt ZI

B — Interruption du mode planifié et acquisition, selon le mode d'opportunité d'imagette de la zone d'opportunité ZOP

C — Reprise du mode planifié Temps d'acquisition et/ou nombre d'imagettes par bandeau réduit de manière à rattraper le retard et à couvrir au moins la ZI

D — Une fois le retard rattrapé, Reprise du mode planifié sur ZPN ou ZI ou du mode d'opportunité sur nouvelle ZOP

## FIG.10

FIG.11

FIG.12

EP 4 305 381 B1

FIG.13

FIG.14

EP 4 305 381 B1

FIG.15

EP 4 305 381 B1

EP 4 305 381 B1

B

PM

Iint

70

ZPN-ZI

FIG.16

FIG.17

EP 4 305 381 B1

FIG.18

EP 4 305 381 B1

EP 4 305 381 B1

FIG.19

FIG.20

## RÉFÉRENCES CITÉES DANS LA DESCRIPTION

**Documents brevets cités dans la description**

- WO 2010134075 A1